# EUROPEAN PATENT SPECIFICATION

(11) **EP 1 406 224 B1**
(45) Date of publication and mention of the grant of the patent: **15.07.2015**
(21) Application number: 03090330.6
(22) Date of filing: 02.10.2003
(51) Int. Cl.: H04R 1/08, H04R 29/00, G08C 17/02

(54) **Method and apparatus for remote control of an audio source such as a wireless microphone system**
Verfahren und Vorrichtung zur Fernbedienung einer Audioquelle wie ein drahtloses Mikrofonsystem
Procédé et dispositif pour télécommander d'une source audio tel qu'un système de microphone sans fil

(30) Priority: 03.10.2002 US 415717 P; 30.09.2003 US 675859
(43) Date of publication of application: 07.04.2004
(73) Proprietor: AUDIO-TECHNICA U.S., INC., Stow Ohio 44224 (US)
(72) Inventor: Stathem, Kelly, Cleveland Heights, OH 44118 (US); Kamimura, Fumio, Machida-shi Tokyo 195-0062 (JP)
(74) Representative: Wablat, Wolfgang

(56) References cited:
- WO-A-97/38496
- WO-A2-02/061955
- US-A- 6 041 225
- US-A1- 2002 042 282
- US-B1- 6 424 820

## Description

### FIELD OF THE INVENTION

The present invention generally relates to monitoring of an audio network environment, and, more specifically, to a method and apparatus for monitoring and remotely controlling a wireless audio source via a communication network.

### BACKGROUND OF THE INVENTION

There is known from US 2002/042282 A1 an apparatus and hence a method for remotely controlling a set of functions related to a wireless audio system from a remote central control. This apparatus is directed to a microphone monitoring system that involves two-way communication between the wireless microphone and base station. This consumes considerable bandwidth and involves unnecessary complexity in structure and operation.

Modem audio communication systems, such as microphone systems, provide a reliable infrastructure to transmit voice signals. A wireless microphone system generally comprises an acoustic source such as a microphone and a receiver that are linked to each other via a transmitter. The transmitter therefore facilitates a wireless link between the acoustic energy from the audio source and the receiver.

These audio components, i.e. the microphone, transmitter and receiver, are commonly available in the audio industry. The microphone is an audio transducer in which acoustic energy from a sound source is converted into electric output through an oscillating element that oscillates in response to the transmitted acoustic energy. The electric output is fed to the transmitter.

The transmitter is wireless, and is available either as a handheld device or as a body pack. The transmitter sends the microphone's electric output to the receiver via a signal transmission captured by the receiver's antenna. The signal transmission may be, for example, a Radio Frequency (RF) signal, and a pilot tone is provided to so that the receiver can recognize the signal that is being sent from the transmitter that carries the microphone output.

The receivers can be either a diversity or a non-diversity system. Diversity wireless receiver systems are highly desirable because they effectively combat the most common problem with wireless microphone equipment, namely signal dropouts due to multi-path. Diversity wireless systems also almost always have better operating range than similar non-diversity systems.

Wireless receivers must have either one or two external antennas, and there should be a clear open-air path between theA9 antennas and the transmitter's antenna. Every wireless microphone system operates on a specific frequency. The government dictates which frequency ranges can be used by wireless systems. By government policy, all frequencies are shared by a large number of users across the country. There must be one transmitter and one receiver to make a complete wireless system, and they both must be on the same frequency.

The performance of such wireless microphone systems typically is tested and evaluated at the physical location of their audio components, or at a distant testing and repairing facility. However, both of these situations introduce their respective disadvantages in that they require either a shipment of the wireless microphone components to the distant facility, or require an arrangement for the physical presence 01 a qualified technical individual at the location where the wireless microphone system is being used.

Recommended Standard (RS) 232 is a commonly utilized standard *tor* serial communications in information handling systems. RS-232 has been around as a standard for decades as an electrical interface between Data Terminal Equipment (DTE) and Data Circuit-Terminating Equipment (DCE). Examples of DTEs include Personal Computers (PCs), workstations, file servers, or print servers that, as a group, are all often referred to as end stations. Examples of DCEs include intermediate network devices that receive and forward data frames across a network that are either (i) standalone devices such as repeaters, network switches, and routers or (ii) communications interface units such as interface cards and modems. RS-232 is used for asynchronous data transfer as well as synchronous links.

The Ethernet has replaced serial ports to dominate the way computers communicate, and has become the communications method of choice. For example, Ethernet Local Area Networks (LANs) consist of network nodes and interconnecting media. The network nodes fall into two major e'aSS9S: DTEs and DCEs. Typically micro-controller based projects communicate over 10base T Ethernet or higher, and Ethernet boards allow data traffic to end from the Internet. The Internet is only one type of a communication network. Other communication networks may be Local Area Networks (LAN), Wide Area Networks (WAN), Integrated Services Digital Networks (ISDN), wireless networks, and other similar networks to transfer data between two points

### BRIEF DESCRIPTION OF THE DRAWINGS

The benefits and advantages of the present invention will become more readily apparent to those of ordinary skill in the relevant are after reviewing the following detailed description and accompanying drawings, wherein:
Fig. 1 is a schematic diagram illustrating an exemplary communication network which demonstrates the overall operation of a method of monitoring and controlling a wireless audio source.
Fig. 2 is a block diagram illustrating an acoustic transducer combined with a transmitter that incorporates a digitally modulated pilot tone generator, utilized in an exemplary embodiment of the present invention.
Figs. 3A and 3B are block diagrams illustrating wireless communication between a transmitter and a receiver which are utilized in an exemplary embodiment of the present invention.
Fig. 4 is a block diagram of an embodiment of a wireless receiver utilized in an exemplary embodiment of the present invention.
Fig. 5 is a flow chart illustrating an exemplary embodiment of the present invention.
Fig. 6 is a block diagram illustrating a master receiver and a number of slave receivers connected via a communications bus, utilized in a further exemplary embodiment of the present invention.
Fig. 7 is a schematic diagram of a further embodiment of a wireless transmitter system that incorporates a number of aspects of the present invention.
Fig. 8 is a schematic diagram of a further embodiment of a wireless receiver system that incorporates a number of aspects of the present invention.
Figs. 9A-9C are diagrams which illustrate an exemplary frame composition, frame leader format, and data format for 8 bit unit data with asynchronous serial transmission.

### DETAILED DESCRIPTION OF THE INVENTION

While the present invention is susceptible of embodiments in various forms, there is shown in the drawings and will hereinafter be described a presently preferred embodiment with the understanding that the present disclosure is to be considered an exemplification of the invention and is not intended to limit the invention to the specific embodiments illustrated.

It should be further understood that the title of this section of this specification, namely, "Detailed Description of the Invention", relates to a requirement of the United States Patent Office, and does not imply, nor should it be inferred to limit the subject matter disclosed herein.

In the present disclosure, the words "a" or "an" are to be taken to include both the singular and the plural. Conversely, any reference to plural items shall, where appropriate, include the singular.

By using, for example, Ethernet remote control of an audio system such as a wireless microphone, the following functions can be monitored: receiver Internet Protocol (IP) address, receiver link address, receiver RF level, and receiver AF level. In addition, the following functions can also be controlled: receiver name, receiver frequency, receiver squelch level, receiver meter hold (on/off), receiver antenna power (on/off), receiver mute (on/off), default display on receiver state, receiver lock condition, and receiver load/save preset. This is especially advantageous because, for example, problems with audio systems such as wireless microphone systems can be remotely monitored and diagnosed without the need to have the microphone system shipped back to the manufacturer.

In an exemplary embodiment of the present invention, a pilot tone, that is used to allow a wireless receiver to recognize the transmitter signal, is digitally modulated to contain additional information related to the transmitter and the corresponding audio source such as a wireless microphone. This additional information can include, for example, the transmitter name, transmitter type (handheld or belt-pack), capsule type (condenser or dynamic), input type (microphone or instrument), transmitter gain setting, transmitter power (high or low), battery level, state of transmitter lock mode, state of transmitter mute condition, transmitter preset name. This list can be added to the list of monitored functions, already detailed above.

Important features of the present invention include, for example, the use of robust web-based technologies to monitor and control the plurality of enumerated functions of the wireless audio system in real time. Specifically, the invention enables, for example, remote diagnosis, performance tracking, tuning, and adjustment of the wireless audio system from a remote location. Further, the present invention enables, in an exemplary application, remote troubleshooting and debugging. Indeed, in case a component defect is detected, the remote central control can check whether a remote-fix is possible. If not, the remote central control can alert a local technician to attend to the problem on a real time basis. If the problem is too complicated to be fixed locally, the defective component is removed for repairs at an appropriate technical control.

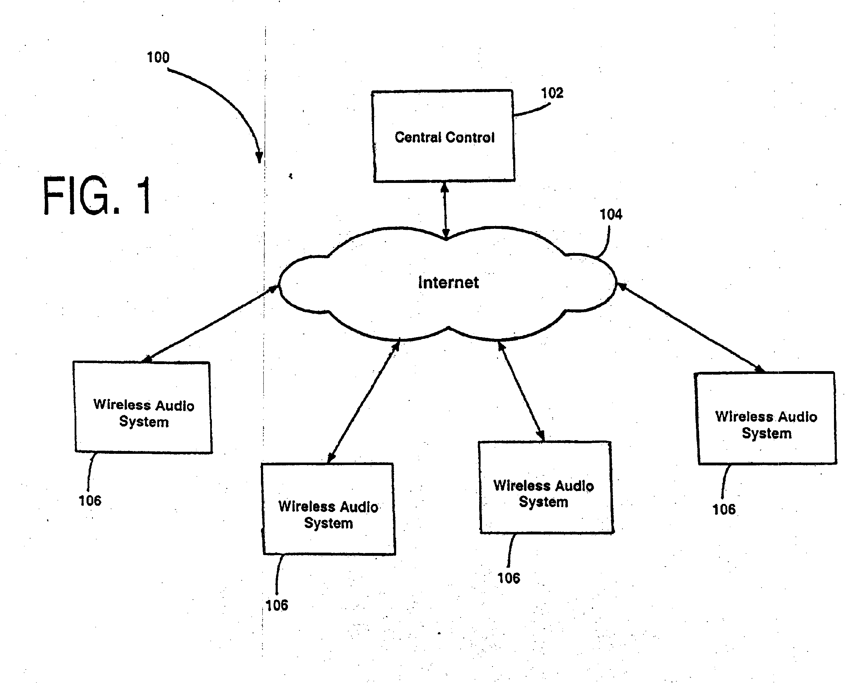

FIG. 1 is an exemplary communication network 100 illustrating an embodiment of the overall operation that may be used to provide an understanding of the method of monitoring and Controlling a wireless audio source. In this exemplary communication network, a remote central control 102 is coupled via the Internet 104 to a number of wireless microphone systems 106. This structure provides for a bi-directional communication between the remote central control 102 and the wireless microphone systems 106. This structure also allows for data that was captured via wireless mode by the wireless systems 106 to be provided to the central control 102 located remotely from the audio source, and the central control 102 can in turn provide to the wireless systems 106 corrective measures for controllable components. This data provided on a continuous real time basis over the Internet 104, could also be sent via a cellular network from the wireless microphone systems 106 to the internet 104, and from the Internet 104 to the remote central control 102.

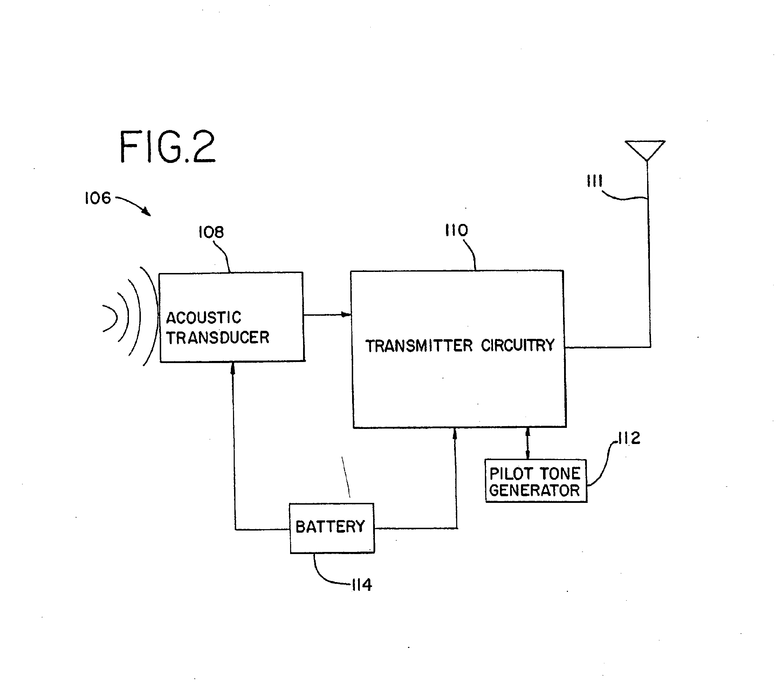

FIG. 2 is a schematic block diagram of an example of a portion of the wireless audio system 106 shown in FIG. 1. In this exemplary application, wireless audio system 106 comprises a wireless microphone system in which acoustic signals are picked up by an acoustic transducer 108, such as a microphone or a musical instrument. These signals are feed to a transmitter 110. The transmitter 110 converts the audio signals to a radio signal, and broadcasts it via an antenna 111 to a surrounding area. The broadcast is accomplished by using the acoustic signal to modulate a radio carrier and transmit the resulting radio signal effectively. The transmitter 110 is therefore equipped with a circuitry designed to process the audio signal conversion, the modulation and the broadcast of the radio signal. As part of the radio communication, an additional signal, called a pilot tone, is communicated to the wireless receiver. This pilot tone is created by a pilot tone generator 112, and carries typically information related exclusively to the frequency of the radio signal being broadcasted by the transmitter 110. A battery 114 or other suitable power source is included to provide electrical power.

The microphone system 106 includes a power switch, a mute switch, a gain adjustment, and a frequency selector (not shown). Whereas the status of these controls is typically logged locally, in the present invention the pilot tone is digitally modulated and programmed to communicate the status of these controls to a wireless receiver as discussed in greater detail hereinafter. The list of controls that this digitally modulated pilot tone communicates includes further Information such as, for example, the transmitter name, the transmitter type, the capsule type, the input type, the level of battery 114 and the transmitter preset name.

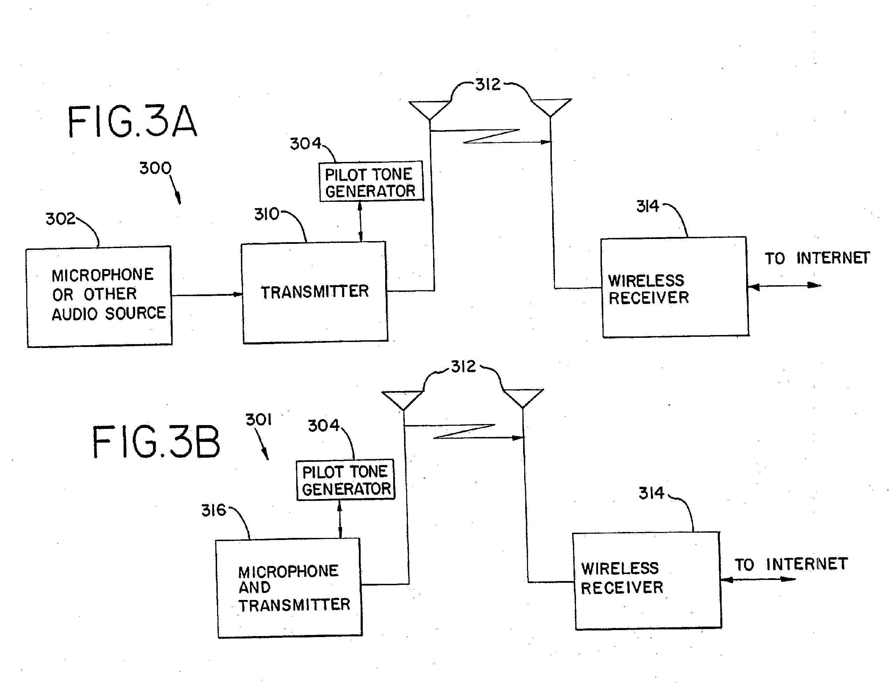

Figs 3A and 3B are schematic block diagrams of two wireless microphone systems 300 and 301 that incorporate aspects of the present invention. Systems 300 allow for the sending of information in the form of a radio signal between the transmitters 310 or 316 and the receivers 314. This information is converted to a radio signal, transmitted, received and converted back to its original form. In the present invention, the transmission incorporates the digitally modulated pilot tone, which communicates the additional information, detailed above, about the audio source 302 and the transmitters 310 or 316.

One function of the receivers 314 is to provide a first stage of radio frequency filtering to prevent unwanted radio signals from causing interferences. They should effectively reject signals, which have frequencies substantially above or below the operating frequency broadcasted by the transmitters 310 or 316. The list of controls sent via the digitally modulated pilot tone is logged for monitoring purposes. As indicated earlier, the receivers 314 have a corresponding list of functions that can be controlled remotely. These two lists of functions can be communicated to the central control 102 via the Internet 104. This communication of the functions between the receivers 314 and the Internet 104 is facilitated by the additional components introduced above, i.e. the RS232 and the Ethernet boards.

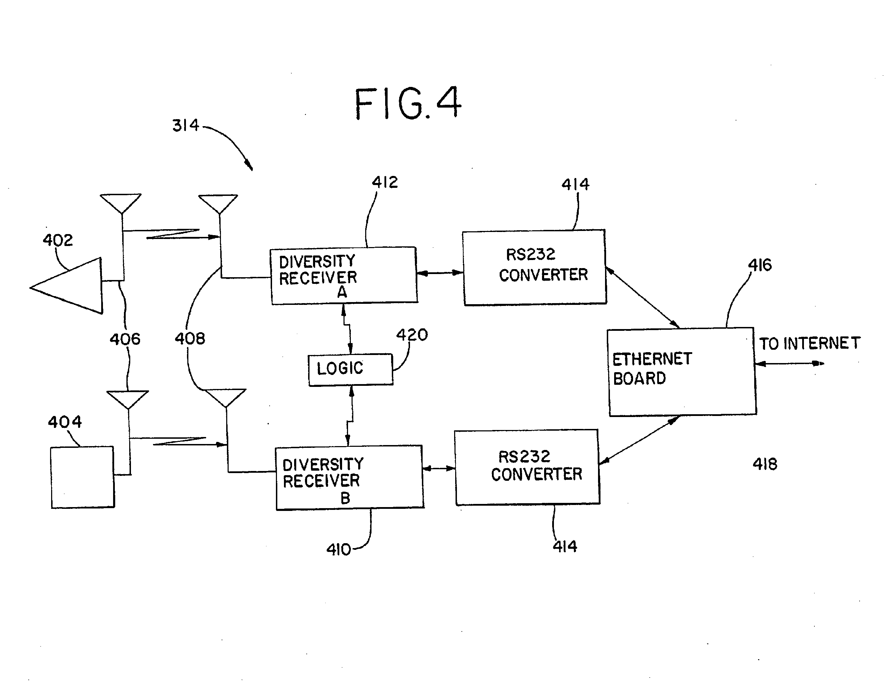

Fig. 4 is a block diagram of an embodiment of the wireless receiver 314 shown in Figs. 3A and 3B. In an exemplary embodiment, receiver 314 comprises an "AEW-5200 Wireless" receiver that is commercially available on the market from Audio Technica USA, Inc. Acoustic signals picked up by microphones or created by musical instruments are transmitted by wireless transmitters, such as the handheld 402 or the body-pack 404, in a wireless mode to diversity receivers 412 and 414.

Wireless transmission signals, typically RF signals, are communicated via antennas 406. These RF transmitted signals are picked up by antennas 408, which are affixed to diversity receivers A and B, 412 and 410. Diversity receivers 412 and 410 are able to avoid signal dropouts due to multi-path because they Include two antennas and two receiver channels. Special circuits in the receivers select the audio from antennas 408 and receiver channel with the best signal. Because the chances that there will be simultaneous dropouts at both antennas 408 are extremely low, diversity receivers 412 and 410 provide almost complete immunity from dropouts due to multi-path.

Diversity operation can also improve the useful operating range for wireless systems. This is because even when there are no actual total dropouts, multi-path effects can reduce the amount of signal available at long ranges. This can cause the receiver to briefly lose audio well before the transmitter 402 is truly out of range. With diversity, complete signal loss is much less likely and the useful operating range of the wireless system will be extended. In addition a logic device 420 coupled to both diversity receivers A 412 and B 410, can enhance the selection of a received RF signal with the best signal to noise ratio. This selection of the best diversity receiver, A 412 or B 410, is performed continuously and seamlessly for the duration of the audio transmission.

As the transmitted signal is being selected by either diversity receiver A 412, or by diversity receiver B 410 because of its signal strength, sensors monitoring specific functions of the transmitters and the receivers assemble a predefined data list. This predefined data list includes the plurality of functions identified earlier. This data list is communicated to an RS232 converter 414. The RS converters 414 convert the data received from the receivers A 412 and B 410 to the Ethernet board 416. This Ethernet board 416 then facilitates the transmission of the converted data in form of data frames through the internet 104 to the remote central control 102 (Fig. 1).

Once the data reaches the remote central control 102, it is diagnosed to evaluate the status of the monitored functions. The data acquisition may contain logic that allows a notification, such as an alarm, for any monitored function whenever its corresponding notification characteristics are met. In the case of a controllable function, appropriate controls are communicated back to the wireless control system to adjust or rectify accordingly the controllable function.

In the case of a non-controllable monitored function, the condition of this monitored non-controllable function may be communicated directly to an individual on location for immediate attention, or logged in a for future repair assignments.

The system of the present invention includes the remote central control, the communication network, and can allow for a number of wireless control systems. This system is only limited by the capacity of the remote central control and the communication network to handle data traffic to and from real time simultaneously monitored wireless control systems. The location of these wireless control systems is limited only by their ability to connect to a communication network, such as the Internet.

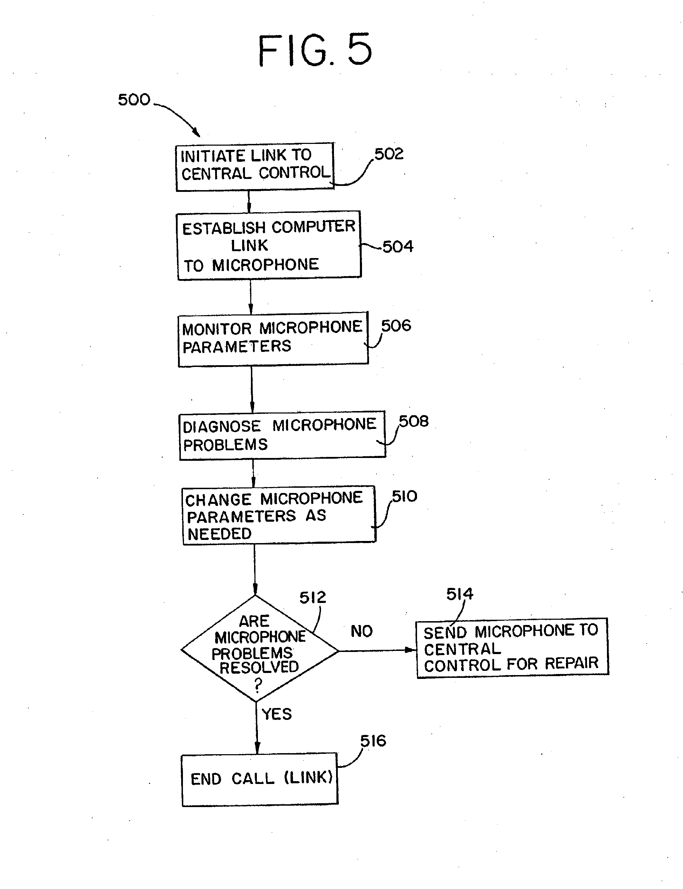

Fig. 5 is a flow chart 500 illustrating an embodiment of the method of monitoring and controlling a wireless audio source such as a wireless microphone. At step 502, a link is initiated to the central control 102. Once the link is made, the wireless microphone system 106 is linked to a computer at the central control 102 at step 504. The central control receives identification information of the wireless microphone system 106 and the corresponding monitored function list. Further operational and instrumentation data is transmitted to the central center for analysis and evaluation of the monitored functions of the wireless microphone system 106 at step 506. Each element of the monitored function list is evaluated against a corresponding stored value or status reference.

In the event a defect or malfunctioning Is detected, at step 508, for any element of the monitored functions list, a remedial action will be taken, at step 510, as deemed appropriate based on the recommendation of a technical support based at the central control 102 or an expert system stored in the computer at the central control 102. Such remedial may be changing parameters of the malfunctioning functions of the wireless microphone system 106, at step 510. At step 512, results to the performed remedial actions are evaluated back at the central control 102.

If the defect or malfunctioning is not resolved for any of the controllable monitored functions, the wireless microphone system 106 will be sent for repair to an appropriate repair facility, at step 514. Otherwise, the technical support may choose to suspend the link, at step 516, between the wireless microphone system 106 and the central control 102, or may keep monitoring the wireless microphone system for any part of the audio transmission.

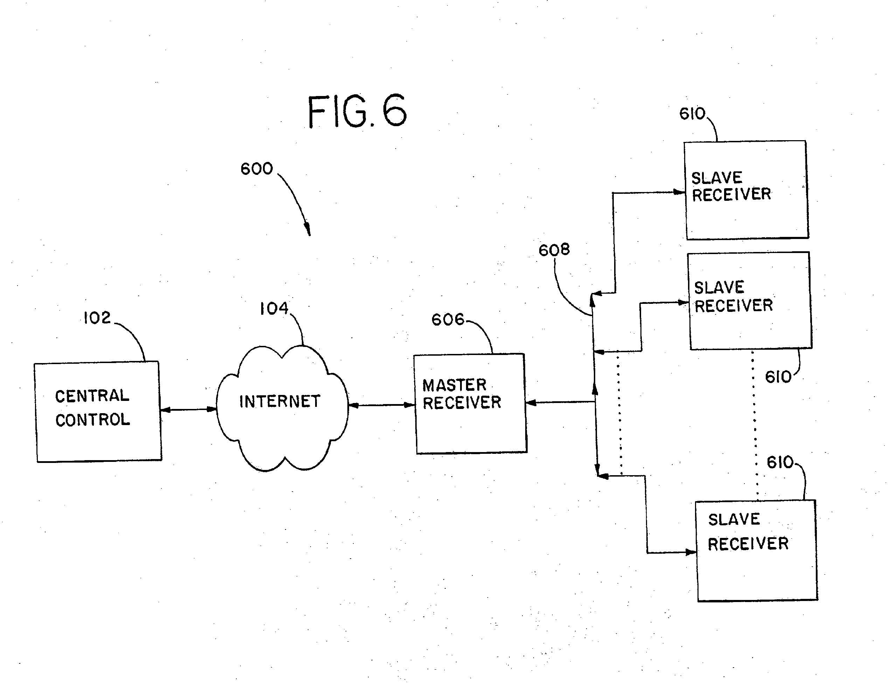

Fig. 6 is a block diagram illustrating a further exemplary embodiment of the present invention. In this application, a system 600 is shown that comprises a master receiver 606 and a number of slave receivers 610 that are connected via a communication bus 608. In this exemplary communication network, the remote central control 102 is coupled via the Internet 104 to a master receiver 606. The master receiver 606 is, in turn, coupled to a number of slave receivers 610 via, for example, a communication bus 608 or any other communication structure that facilitates a master/slave communication system.

In the master/slave communication system, the master receiver 606 is in total control of communications. This master receiver 606 makes a polling of data (i.e., sends and receives data, such as the plurality of monitored functions introduced above) to each slave receiver 610 in sequence as desired by the central control 102. The slave receiver 610 responds to the master receiver 606 only when it receives a request. This request can be a broadcast to all slave receivers 610, or can be unique to a specific slave receiver 610 as it includes the slave receiver's 610 unique identification in the form of, for example, an Internet Protocol (IP) address. IP addresses are used to deliver packets of data across a communication network and have what is termed end-to-end significance. This means that the source and destination IP address remains constant as the packet traverses the communication network. Each slave receiver 610 will have its own unique IP address to allow correct identification. If a slave receiver 610 does not respond for a predetermined period of time, the master receiver 606 retries to poll it for a number of times before continuing to poll the next slave receiver 610.

As discussed above, each wireless audio system 200 will have a data list that includes the plurality of controllable and non-controllable monitored functions, that corresponds to its wireless communication system. This master/slave system allows the central control 102 to include any desired corrective measures for a specific slave receiver 610, by identifying it in the data packet it communicates to the master receiver 606 by its IP address. The master receiver 606 will, in turn, communicate the desired corrective measures to the targeted slave receiver 610.

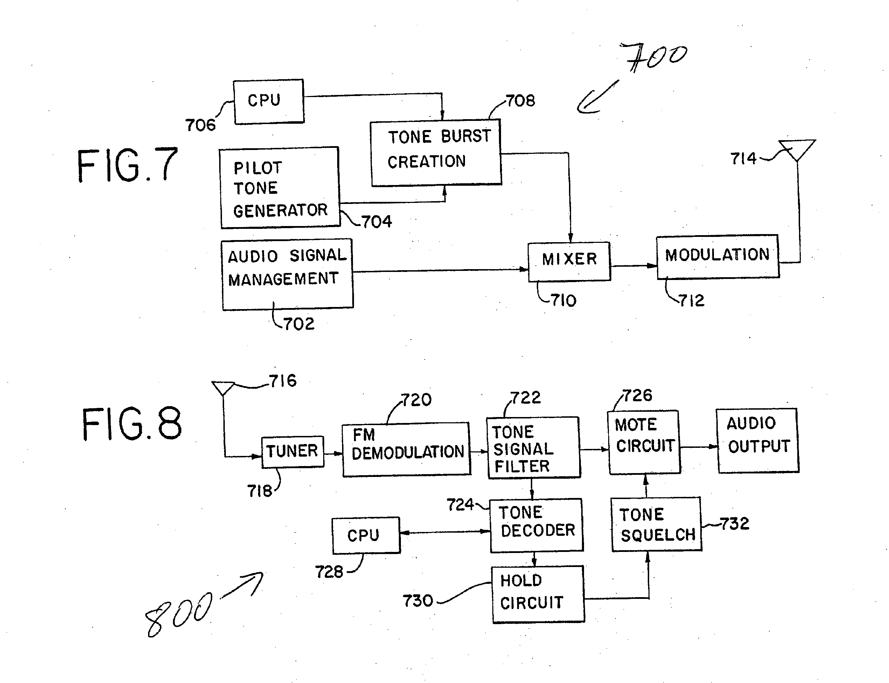

Referring to Fig. 7, a specific embodiment of an exemplary transmitter system 700 that incorporates a number of aspects of the present invention is shown. Fig. 8 shows an exemplary receiver system that is used in connection with the transmitter system shown in Fig. 8.

The circuitry shown in Figs. 7-8 allows transmission of various data between a transmitter and a receiver, and products incorporating such circuitry can be manufactured for minimum cost. For example, there is no additional circuitry required to compensate for the problems associated with recognition of a threshold frequency in the case of amplitude modulation. Similarly, costs associated with the provision of accurate frequency for frequency switching purposes, as well as costs associated with providing multiple oscillators, are eliminated.

On the transmitter side, a function is provided that can intermit the tone signal for accurate frequency by utilization of coded serial number and a tone burst. Serial data is represented by turning the tone signal "on" or "off." As one example, the existence of the tone represents a "1" while no tone represents a "0." This is done at an accurate bit rate (serial data clock).

On the receiver side, the circuitry restores continuous codes with 1 or 0, and the CPU restores them to data. The circuitry also includes a hold circuit that holds the tone burst slightly longer than the maximum period so that a "no tone" occurs at a tone burst. This allows, for example, the receiver to not be muted by mistake even though the tone signal is intermitted. In one exemplary embodiment, the "hold" circuit includes a diode and a capacitor that detects the tone signal, such that the capacitor is big enough to hold the signal through any serial data chatter that may be generated by the mute circuit in connection with the representation of serial data by turning the tone signal on and off.

The receiver circuitry also provides additional advantages. Normally, when a transmitter stops transmitting a wave, the tone for the tone squelch signal is stopped first, and the wave is then stopped after waiting a sufficient time to operate the mute circuit of the receiver. This can introduce unwanted noise into the transmitted signal. To avoid this, a hold circuit is utilized to add additional holding time on the stabilized time for the mute circuit of the receiver. This reduces noise addition to the transmitted signal.

In the exemplary embodiment shown in Fig. 7, all of the illustrated electronics are included in a hand-held wireless microphone or a body pack. Transmitter system 700 includes an audio signal management block 702, which includes an acoustic transducer, and other related circuitry that allows an audio signal to be changed into an electrical signal. A pilot tone generator 704 generates a pilot tone at a frequency, in one exemplary embodiment of about 32kHz.

A central processing unit (CPU) 706 is incorporated within the transmitter system 700. The CPU 706 provides coded and serialized information from the transmitter to the tone burst creation circuitry 708, which incorporates this information on the tone burst. The resulting signal is fed to a mixer 710 which combines the resulting signal with an audio signal. The combined signal from mixer 710 is modulated at block 712 and the transmitted to ambient atmosphere via highfrequency output antenna 714.

Referring to Fig. 8, a signal from the transmitter system 700 is received by antenna 716 and sent to tuner 718 and demodulator 720 for appropriate tuning and demodulation operations. A filter 722 is included to separate from the transmitted audio signal the tone burst signal. The tone burst signal is fed to a tone decoder 724, while the transmitted audio signal is sent to the mute circuit 726.

The tone decoder receives the tone burst signal from the filter 722, and communicates the decoded result to CPU 728. As discussed in greater detail hereinafter, the decoded result comprises certain serial data. The tone signal is fed from the decoder 724 to a hold circuit 730, and then on to a conventional tone squelch circuit 732. The tone squelch circuit 732 and the mute circuit 726 cooperate to provide an audio output at block 734 that includes substantially reduced noise at minimum cost.

Table 1 set forth below sets forth one exemplary list of the coded serialized data that may be communicated between a transmitter and a receiver of a wireless microphone or other system that incorporates aspects of the present invention:

**Table 1**

| **Index Code** | **Data Name** | **Format** | **Content** | | | | |
|---|---|---|---|---|---|---|---|
| 0x00 | Audio Amp. Gain | 0001/1111 | Trim Max | | | | |
| | Condenser Mic.-> | \| | \| | | | | |
| | | 0000/0000 | Trim Min | | | | |
| | Dynamic Mic. -> | 1001/1111 | Trim Max | | | | |
| | | \| | \| | | | | |
| | | 1000/0000 | Trim Min | | | | |
| 0x01 | RF Output Level | Bit 0 | | Low | | | High |
| | Type of Transmitter | Bit 1 | | BP | | | HH |
| | Condition of Input Selection | Bit 2 | 0 | Guitar | | 1 | Mic |
| | Situation of limiter usage | Bit 3 | | Off | | | On |
| | Situation of pre-emphasis usage | Bit 4 | | Off | | | On |
| | Condition of Mute | Bit 5 | | Norm | | | Mute |
| | Condition of Key guard usage | Bit 6 | 00 | | No Lock | | |
| | | Bit 7 | 01 | | Power Lock | | |
| | | | 10 | | Mute Lock | | |
| | | | 11 | | All Lock | | |
| 0x02 | Preset No. | Bit 0 to 3 | 0 to 15(max) | | | | |
| | Remaining Battery Life | Bit 4 to 7 | 0x02 to 0x06 | | | | |
| 0x0a | 1^{st} character of name | | ASCII Code | | | | |
| 0x0b | 2^{nd} character of name | | ASCII Code | | | | |
| 0x0c | 3^{rd} character of name | | ASCII Code | | | | |
| 0x0d | 4^{th} character of name | | ASCII Code | | | | |
| 0x0e | 5^{th} character of name | | ASCII Code | | | | |
| 0x0f | 6^{th} character of name | | ASCII Code | | | | |

The data sets encompassed by the present invention, including that presented in Table 1, provides a number of distinct advantages. On the transmitter side, the data sets provide a function that allows a unique wording or code to be associated with that user, and allows the code to be memorized. The gain/output power of an audio amplifier, as well as a setpoint condition of audio mute, can be memorized as well. The data set also allows individual setpoints and user names to be memorized as a set. All of this data, including current information regarding the remainder of battery life, can be coded and transmitted with a tone burst signal as discussed above. On the receiver side, a receiver indicates the setpoint data, and operates by the codes received by the transmitter.

In accordance with this aspect of the invention, it is possible to control a transmitter and a receiver as a set by displaying the user name on the receiver. When the setpoint condition of a transmitter is sent to a receiver with a user name, it is confirmable for a specific setup condition per each transmitter through each receiver. As a result of this, it is not needed for a person using the wireless audio system to make a written note of the user name or setpoint for each transmitter and receiver. This also reduces mistakes and enhances job performance of such personnel.

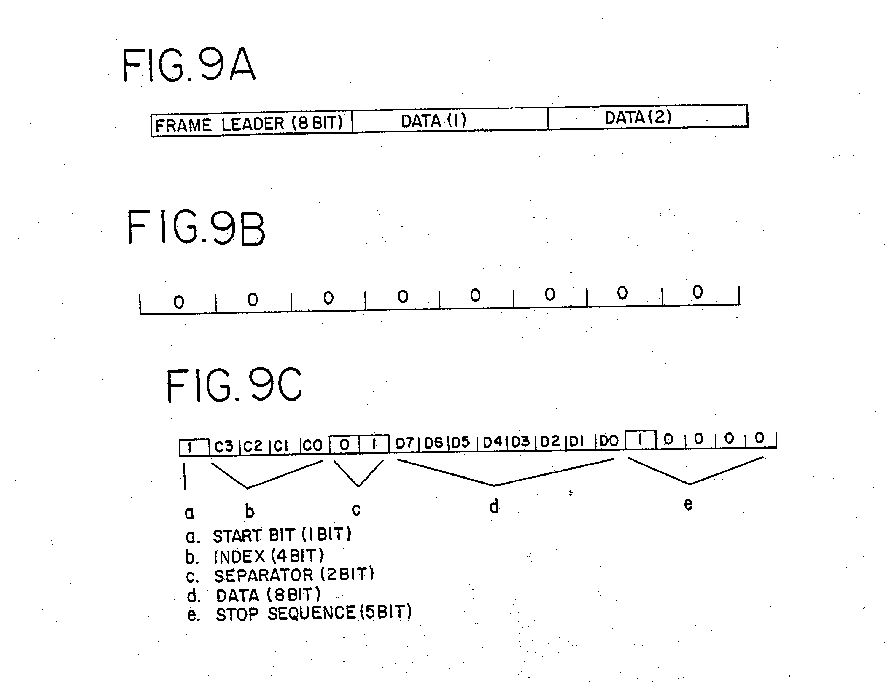

Referring to Figs. 9A-9C, diagrams which illustrate an exemplary frame composition, frame leader format, and data format for 8 bit unit data with asynchronous serial transmission are shown. In the illustrated embodiment of the invention shown in Fig. 9A, each frame composition comprises a frame leader and two duplicates of the data that is to be sent from a transmitter to a receiver. Fig. 9B illustrates an eight bit frame leader format. Fig. 9C shows how the data is formatted in an exemplary embodiment of the present invention. It should be appreciated that the embodiments of the invention shown in Table 1 and Figs. 9A-9C is exemplary in nature, and is not intended to limit the scope of the present invention to the specific embodiments shown. Each system will be specifically tailored to that which is needed by the particular requirements of the user.

From the foregoing it will be observed that numerous modifications and variations can be effectuated without departing from the scope of the novel concepts of the present invention. It is to be understood that no limitation with respect to the specific embodiments illustrated is intended or should be inferred. The disclosure is intended to cover by the appended claims all such modifications as fall within the scope of the claims.

## Claims

1. A method for remotely controlling a set of functions related to a wireless audio system from a remote central control,
said method comprising the steps of:
providing an audio system that includes a transmitter and a receiver;
detecting an audio signal via an acoustic transducer located within the transmitter;
digitally modulating a pilot tone with a frame of data, said frame of data containing respective, real time parameters of a plurality of predetermined, monitored functions of said transmitter, said parameters disposed within respective predetermined locations of the frame;
combining the modulated pilot tone with the detected audio signal;
transmitting the combined modulated audio signal and modulated pilot tone from the transmitter to the receiver and storing the frame of data therein;
establishing a link between the receiver of said wireless audio system and a central control for remotely controlling the set of functions through a communication network;
determining whether or not any problems exist by monitoring said data stored in said receiver via said remote central control;
communicating from said remote central control to said audio system appropriate remedial actions to alleviate any of said problems.

2. The method of claim 1, wherein said audio system comprises a wireless audio system.

3. The method of claim 2, wherein said wireless audio system comprises a wireless microphone system.

4. The method of claim 3, wherein said transmitter comprises a handheld device.

5. The method of claim 3, wherein said transmitter comprises a body pack.

6. The method of claim 1, wherein said receiver comprises a diversity receiver.

7. The method of claim 1, wherein said data comprises data regarding characteristics of said transmitter or said receiver that can be monitored but not controlled.

8. The method of claim 7, wherein said data is selected from a group consisting of: receiver internet protocol address, receiver link address, receiver RF level, receiver AF level.

9. The method of claim 1, wherein said data comprises data regarding characteristics of said transmitter or said receiver that can be monitored and controlled.

10. The method of claim 9, wherein said data is selected from a group consisting of: receiver name, receiver frequency, receiver squelch level, receiver meter hold, receiver antenna power, receiver mute, default display on receiver state, receiver lock condition, receiver load present, and receiver save preset.

11. The method of claim 1, wherein said communicating step includes the step of transmitting replacement data to said receiver that is implemented by said receiver.

12. The method of claim 11, wherein said data is selected from a group consisting of: receiver name, receiver frequency, receiver squelch level, receiver meter hold, receiver antenna power, receiver mute, default display on receiver state, receiver lock condition, receiver load present, and receiver save preset.

13. The method of claim 1, wherein the receiver of said audio system comprises a master receiver and two or more slave receivers that are operatively coupled to said master receiver, each of said slave receivers including a slave transmitter associated therewith.

14. The method of claim 13, wherein said transmitting step comprises the step of transmitting data from the slave transmitter associated with one of said slave receivers to said master receiver, and transmitting said data from said master receiver to said central control.

15. The method of claim 1, wherein said transmitting steps comprising the steps of combining data associated with said transmitter with a pilot tone signal, mixing said combined data/pilot tone signal with an audio signal, and transmitting said combined data/pilot tone/audio signal to said receiver.

16. The method of claim 15, wherein said pilot tone signal is approximately 32 kHz.

17. A wireless microphone system for remotely controlling a set of functions related to a wireless audio system from a remote central control with the, method of one or several of claims 1 to 16, comprising:
a transmitter system (700),
a central processing unit (CPU) (706) adapted to provide coded and serialized information from the transmitter,
a tone burst creation circuitry (708) adapted to incorporate the provided coded and serialized information into a pilot tone burst,
a mixer (710) adapted to combine the resulting signal with an audio signal,
a modulation block (712) adapted to modulate the combined signal from the mixer (710) and
a wireless transmitter adapted to wirelessly transmit the modulated audio signal from the microphone mixed with the pilot tone burst to a receiver (800).

18. The wireless microphone system as in claim 17 further comprising:
a wireless receiver located in the surrounding area of the wireless microphone that receives the transmitted audio signal and plurality of status indicators from the wireless microphone;
a central control that remotely controls a set of functions of the wireless microphone system; and
a communications link established between the wireless receiver and central controller through a public communication network.

19. A wireless microphone system as in claim 17, further comprising:
a handheld wireless microphone or body pack including an audio management block (702), the central processing unit (CPU) (706), the modulation block (712) or and an output antenna (714) wherein the audio management block (702) changes an audio signal into an electric signal, the central processing unit (CPU) (706) provides coded information about the handheld wireless microphone or body pack and the modulation block (712) modulates the changed audio signal and coded information for wireless transmission through the# output antenna (714).

20. The wireless microphone system as in claim 19 further comprising:
a wireless receiver located in the surrounding area of the handheld wireless microphone or body pack that receives the transmitted audio signal and plurality of status indicators from the wireless microphone,
a central control that remotely controls a set of functions of the wireless microphone system and a communications link established between the wireless receiver and central controller through a public communication network.

## Patentansprüche

1. Verfahren zum Fernsteuern einer Reihe von Funktionen, die ein drahtloses Audiosystem betreffen, von einer zentralen Fernsteuerung, wobei das Verfahren die folgenden Schritte umfasst:
Bereitstellen eines Audiosystems, das einen Sender und einen Empfänger umfasst;
Ermitteln eines Audiosignals über einen Schallwandler, der sich innerhalb des Senders befindet;
digitales Modulieren eines Pilottons mit einem Datenrahmen, wobei der Datenrahmen jeweilige Echtzeitparameter von mehreren von vorbestimmten überwachten Funktionen des Senders enthält, wobei die Parameter innerhalb entsprechender vorbestimmter Stellen des Rahmens angeordnet sind;
Kombinieren des modulierten Pilottons mit dem ermittelten Audiosignal;
Senden des kombinierten modulierten Audiosignals und modulierten Pilottons von dem Sender an den Empfänger und Speichern des Datenrahmens in diesem;
Herstellen einer Verbindung zwischen dem Empfänger des drahtlosen Audiosystems und einer zentralen Steuerung zum Fernsteuern der Reihe von Funktionen durch ein Kommunikationsnetz;
Bestimmen, ob irgendwelche Probleme vorhanden sind oder nicht, durch Überwachen der in dem Empfänger gespeicherten Daten über die zentrale Fernsteuerung;
Kommunizieren von zweckmäßigen Abhilfsmaßnahmen zur Abschwächung eines jeglichen dieser Probleme von der zentralen Fernsteuerung zu dem Audiosystem.

2. Verfahren nach Anspruch 1, wobei das Audiosystem ein drahtloses Audiosystem umfasst.

3. Verfahren nach Anspruch 2, wobei das drahtlose Audiosystem ein drahtloses Mikrofonsystem umfasst.

4. Verfahren nach Anspruch 3, wobei der Sender ein Handgerät umfasst.

5. Verfahren nach Anspruch 3, wobei der Sender einen Bodypack-Sender umfasst.

6. Verfahren nach Anspruch 1, wobei der Empfänger einen Diversity-Empfänger umfasst.

7. Verfahren nach Anspruch 1, wobei die Daten Daten umfassen, die Eigenschaften des Senders oder des Empfängers betreffen, die überwacht aber nicht gesteuert werden können.

8. Verfahren nach Anspruch 7, wobei die Daten von einer Gruppe ausgewählt werden, die aus Folgendem besteht:
Empfänger-Internetprotokolladresse, Empfängerverbindungsadresse, Empfänger-HF-Pegel, Empfänger-NF-Pegel.

9. Verfahren nach Anspruch 1, wobei die Daten Daten umfassen, die Eigenschaften des Senders oder des Empfängers betreffen, die überwacht und gesteuert werden können.

10. Verfahren nach Anspruch 9, wobei die Daten aus einer Gruppe ausgewählt werden, die aus Folgendem besteht:
Bezeichnung des Empfängers, Frequenz des Empfängers, Squelchpegel des Empfängers, Beibehalten der Anzeige des Empfängers, Antennenleistung des Empfängers, Stummschaltung des Empfängers, Defaultanzeige hinsichtlich des Empfängerzustands, Sperrzustand des Empfängers, Vorhandensein einer Last des Empfängers, und Sicherung von Voreinstellungen des Empfängers.

11. Verfahren nach Anspruch 1, wobei der Kommunikationsschritt den Schritt des Sendens von Ersatzdaten an den Empfänger umfasst, das durch den Empfänger ausgeführt wird.

12. Verfahen nach Anspruch 11, wobei die Daten aus einer Gruppe ausgewählt werden, die aus Folgendem besteht:
Bezeichnung des Empfängers, Frequenz des Empfängers, Squelchpegel des Empfängers, Beibehalten der Anzeige des Empfängers, Antennenleistung des Empfängers, Stummschaltung des Empfängers, Defaultanzeige hinsichtlich des Empfängerzustands, Sperrzustand des Empfängers, Vorhandensein einer Last des Empfängers, und Sicherung von Voreinstellungen des Empfängers.

13. Verfahren nach Anspruch 1, wobei der Empfänger des Audiosystems einen Master-Empfänger und zwei oder mehr Slave-Empfänger umfasst, die betriebsfähig mit dem Master-Empfänger gekoppelt sind, wobei jeder der Slave-Empfänger einen ihm zugehörigen Slave-Sender umfasst.

14. Verfahren nach Anspruch 13, wobei der Sendeschritt den Schritt des Sendens von Daten von dem Slave-Sender, der einem der Slave-Empfänger zugehörig ist, an den Master-Empfänger und das Senden der Daten von dem Master-Empfänger an die zentrale Steuerung umfasst.

15. Verfahren nach Anspruch 1, wobei die Sendeschritte die Schritte des Kombinierens von Daten, die dem Sender zugehörig sind, mit einem Pilottonsignal, des Mischens des kombinierten Daten/Pilottonsignals mit einem Audiosignal und des Sendens des kombinierten Daten/Pilot-Ton/Audiosignals an den Empfänger umfassen.

16. Verfahren nach Anspruch 15, wobei das Pilottonsignal ungefähr 32 kHz beträgt.

17. Drahtloses Mikrofonsystem zum entfernten Steuern einer Reihe von Funktionen, die ein drahtloses Audiosystem betreffen, von einer zentralen Fernbedienung durch das Verfahren nach einem oder mehreren der Ansprüche 1 bis 16, umfassend:
ein Sendersystem (700),
eine Zentraleinheit (Central Processing Unit - CPU) (706), die dazu geeignet ist, codierte und serialisierte Informationen von dem Sender bereitzustellen,
Ton-Burst-Erzeugungsschaltungen (708), die dazu geeignet sind, die bereitgestellten codierten und serialisierten Informationen in einen Pilot-Ton-Burst aufzunehmen,
einen Mischer (710), der dazu geeignet ist, das resultierende Signal mit einem Audiosignal zu kombinieren,
einen Modulationsblock (712), der dazu geeignet ist, das kombinierte Signal von dem Mischer (710) zu modulieren und
einen drahtlosen Sender, der dazu geeignet ist, das modulierte Audiosignal von dem Mikrofon, das mit dem Pilot-Ton-Burst gemischt ist, drahtlos an einen Empfänger (800) zu senden.

18. Drahtloses Mikrofonsystem nach Anspruch 17, ferner umfassend:
einen drahtlosen Empfänger, der sich in dem Umgebungsbereich des drahtlosen Mikrofons befindet und das gesendete Audiosignal und mehrere Zustandsindikatoren von dem drahtlosen Mikrofon empfängt;
eine zentrale Steuerung, die eine Reihe von Funktionen des drahtlosen Mikrofonsystems fernsteuert; und
eine Kommunikationsverbindung, die durch ein öffentliches Kommunikationsnetz zwischen dem drahtlosen Empfänger und der zentralen Steuerung hergestellt ist.

19. Drahtloses Mikrofonsystem nach Anspruch 17, ferner umfassend:
ein drahtloses Handmikrofon oder einen Bodypack-Sender, das bzw. der einen Audioverwaltungsblock (702), die Zentraleinheit (Central Processing Unit - CPU) (706), den Modulationsblock (712) oder/und eine Ausgangsantenne (714) umfasst, wobei der Audioverwaltungsblock (702) ein Audiosignal in ein elektrisches Signal umwandelt, die Zentraleinheit (Central Processing Unit - CPU) (706) codierte Informationen über das Handmikrofon oder den Bodypack-Sender bereitstellt, und der Modulationsblock (712) das umgewandelte Audiosignal und die codierten Informationen für die drahtlose Übertragung durch die Ausgangsantenne (714) moduliert.

20. Drahtloses Mikrofonsystem nach Anspruch 19, ferner umfassend:
einen drahtlosen Empfänger, der sich im Umgebungsbereich des drahtlosen Handmikrofons oder des Bodypack-Senders befindet und das gesendete Audiosignal und mehrere Zustandsindikatoren von dem drahtlosen Mikrofon empfängt,
eine zentrale Steuerung, die eine Reihe von Funktionen des drahtlosen Mikrofonsystems und eine Kommunikationsverbindung, die durch ein öffentliches Kommunikationsnetz zwischen dem drahtlosen Empfänger und der zentralen Steuerung hergestellt ist, fernsteuert.

## Revendications

1. Procédé pour commander à distance un groupe de fonctions relatives à un système audio sans fil à partir d'une commande centrale distante, ledit procédé comprenant les étapes suivantes :
la fourniture d'un système audio qui comprend un émetteur et un récepteur ;
la détection d'un signal audio via un transducteur acoustique situé à l'intérieur de l'émetteur ;
la modulation numérique d'une tonalité pilote avec une trame de données, ladite trame de données contenant des paramètres en temps réel respectifs d'une pluralité de fonctions prédéterminées surveillées dudit émetteur, lesdits paramètres étant disposés à des emplacements prédéterminés de la trame ;
la combinaison de la tonalité pilote modulée avec le signal audio détecté ;
la transmission, par l'émetteur, de la combinaison formée par le signal audio modulé et la tonalité pilote modulée au récepteur, et le stockage de la trame de données dans celui-ci ;
l'établissement d'une liaison entre le récepteur dudit système audio sans fil et une commande centrale afin de commander à distance le groupe de fonctions via un réseau de communication ;
la détermination pour savoir si, oui ou non, il existe des problèmes en surveillant lesdites données stockées dans ledit récepteur via ladite commande centrale distante ;
la communication, par ladite commande centrale distante à l'attention dudit système audio, d'actions réparatrices appropriées afin de résoudre n'importe lequel desdits problèmes.

2. Procédé selon la revendication 1, dans lequel ledit système audio comprend un système audio sans fil.

3. Procédé selon la revendication 2, dans lequel ledit système audio sans fil comprend un système de microphone sans fil.

4. Procédé selon la revendication 3, dans lequel ledit émetteur comprend un dispositif tenu à la main.

5. Procédé selon la revendication 3, dans lequel ledit émetteur comprend un emballage de poche.

6. Procédé selon la revendication 1, dans lequel ledit récepteur comprend un récepteur Diversity.

7. Procédé selon la revendication 1, dans lequel lesdites données comprennent des données concernant des caractéristiques dudit émetteur ou dudit récepteur, lesquelles peuvent être surveillées, mais pas contrôlées.

8. Procédé selon la revendication 7, dans lequel lesdites données sont sélectionnées dans un groupe formé par :
une adresse de protocole Internet de récepteur, une adresse de lien de récepteur, un niveau RF de récepteur, un niveau AF de récepteur.

9. Procédé selon la revendication 1, dans lequel lesdites données comprennent des données concernant des caractéristiques dudit émetteur ou dudit récepteur, lesquelles peuvent être surveillées et contrôlées.

10. Procédé selon la revendication 9, dans lequel lesdites données sont sélectionnées dans un groupe formé par :
un nom de récepteur, une fréquence de récepteur, un niveau d'accord silencieux de récepteur, une mise en attente de compteur du récepteur, une puissance d'antenne de récepteur, une sourdine de récepteur, un affichage par défaut sur l'état du récepteur, une condition de verrouillage de récepteur, une présence de charge du récepteur, et une sauvegarde du préréglage du récepteur.

11. Procédé selon la revendication 1, dans lequel ladite étape de communication comprend l'étape de transmission de données de remplacement audit récepteur, laquelle est implémentée par ledit récepteur.

12. Procédé selon la revendication 11, dans lequel lesdites données sont sélectionnées dans un groupe formé par : un nom de récepteur, une fréquence de récepteur, un niveau d'accord silencieux de récepteur, une mise en attente de compteur de récepteur, une puissance d'antenne de récepteur, une sourdine de récepteur, un affichage par défaut sur l'état du récepteur, une condition de verrouillage de récepteur, une présence de charge de récepteur, et une sauvegarde de préréglage du récepteur.

13. Procédé selon la revendication 1, dans lequel le récepteur dudit système audio comprend un récepteur maître et deux ou davantage de récepteurs esclaves qui sont couplés de manière opérative audit récepteur maître, chacun desdits récepteurs esclave comprenant un émetteur esclave qui lui est associé.

14. Procédé selon la revendication 13, dans lequel ladite étape de transmission comprend l'étape consistant à transmettre des données, par l'émetteur esclave associé à l'un des récepteurs esclaves, audit récepteur maître et la transmission desdites données par ledit récepteur maître à ladite commande centrale.

15. Procédé selon la revendication 1, dans lequel lesdites étapes de transmission comprennent les étapes consistant à combiner des données associées audit émetteur avec un signal à tonalité pilote, à mélanger ladite combinaison formée par les données/signal à tonalité pilote avec un signal audio, et à transmettre ladite combinaison formée par les données/tonalité pilote/signal audio audit récepteur.

16. Procédé selon la revendication 15, dans lequel ledit signal à tonalité pilote est de 32 kHz environ.

17. Système de microphone sans fil pour commander à distance un groupe de fonctions concernant un système audio sans fil à partir d'une commande centrale distante avec le procédé selon l'une ou plusieurs des revendications 1 à 16, comprenant :
un système d'émission (700),
une unité de traitement centrale (CPU) (706) fournissant de l'information codée et sérialisée de l'émetteur,
des circuits de création de salve de tonalité (708) intégrant l'information codée et sérialisée fournie dans une salve de tonalité pilote,
un mélangeur (710) combinant le signal résultant avec un signal audio,
un bloc de modulation (712) modulant le signal combiné du mélangeur (710) et
un émetteur sans fil transmettant sans fil le signal audio modulé du microphone mélangé avec la salve de tonalité pilote à un récepteur (800).

18. Système de microphone sans fil tel que revendiqué par la revendication 17, comprenant par tailleurs :
un récepteur sans fil situé dans la zone environnante du microphone sans fil, lequel réceptionne le signal audio transmis et une pluralité d'indicateurs de statut de la part du microphone sans fil ;
une commande centrale qui commande à distance un groupe de fonctions du système de microphone sans fil ; et
une liaison de communication établie entre le récepteur sans fil et la commande centrale via un réseau de communication public.

19. Système de microphone sans fil tel que revendiqué dans la revendication 17, comprenant par ailleurs :
un microphone sans fil tenu à la main, ou un emballage de poche, comprenant un bloc de gestion audio (702), l'unité de traitement centrale (CPU) (706), le bloc de modulation (712) et/ou une antenne de sortie (714), dans lequel le bloc de gestion audio (702) transforme un signal audio en un signal électrique, l'unité de traitement centrale (CPU) (706) fournissant de l'information codée concernant le microphone sans fil tenu à la main ou l'emballage de poche, et le bloc de modulation (712) modulant le signal audio modifié et l'information codée pour une transmission sans fil via l'antenne de sortie (714).

20. Système de microphone sans fil tel que revendiqué dans la revendication 19, comprenant par tailleurs :
un récepteur sans fil situé dans la zone environnante du microphone sans fil tenu à la main, ou de l'emballage de poche, qui réceptionne le signal audio transmis et une pluralité d'indicateurs de statut de la part du microphone sans fil,
une commande centrale qui contrôle à distance un groupe de fonctions du système de microphone sans fil et une liaison de communication établie entre le récepteur sans fil et une commande centrale via un réseau de communication public.
